# FASCICULE DE BREVET EUROPEEN

(11) **EP 2 745 672 B1**
(45) Date de publication et mention de la délivrance du brevet: **09.09.2015**
(21) Numéro de dépôt: 13306686.0
(22) Date de dépôt: 09.12.2013
(51) Int. Cl.: A01D 89/00

(54) **Machine agricole de récolte comportant un dispositif de guidage perfectionné des végétaux**
Landwirtschaftliche Erntemaschine, die eine perfektionierte Vorrichtung zum Führen der Pflanzen aufweist
Agricultural harvesting machine comprising an improved device for guiding plants

(30) Priorité: 20.12.2012 FR 1262381
(43) Date de publication de la demande: 25.06.2014
(73) Titulaire: KUHN S.A., 67700 Saverne (FR)
(72) Inventeur: Gantzer, Christian, 57915 WOUSTVILLER (FR)
(74) Mandataire: Nuss, Laurent

(56) Documents cités:
- EP-A1- 1 327 384
- EP-A1- 1 733 609
- WO-A1-2008/000993
- FR-A1- 2 898 243
- US-A- 3 924 391

## Description

La présente invention se rapporte à une machine agricole pour la récolte de fourrage comportant un bâti auquel est reliée une structure située, au moins partiellement, au-dessus d'au moins un dispositif de ramassage de végétaux au sol, lequel dispositif comportant des dents avec des pointes de dents décrivant une enveloppe courbe lorsque les dents sont animées, la machine comportant également au moins un dispositif de traitement des végétaux ramassés situé à proximité du dispositif de ramassage, et un dispositif de guidage des végétaux situé au moins partiellement au-dessus et à distance réduite du dispositif de ramassage, le dispositif de guidage étant déplaçable par rapport au dispositif de ramassage autour d'un centre instantané de rotation principal, au moyen d'un dispositif de déplacement comportant un premier moyen de liaison et un deuxième moyen de liaison du dispositif de guidage à la structure, le premier moyen de liaison autorisant le dispositif de guidage à pivoter autour d'un premier centre instantané de rotation, le deuxième moyen de liaison autorisant le dispositif de guidage à pivoter autour d'un deuxième centre instantané de rotation, le dispositif de déplacement pouvant être placé dans au moins une première position et une deuxième position, le dispositif de guidage comportant une partie frontale ayant une extrémité frontale inférieure, une partie arrière délimitée par une extrémité arrière, et une partie intermédiaire reliant la partie frontale à la partie arrière.

Sur une machine de ce type connue du document GB 1 475 489, le dispositif de ramassage comporte un rotor avec des dents du type « pick-up ». Le rotor est partiellement entouré d'une surface de guidage formée par exemple par un ensemble de lames courbées entre lesquelles tournent les dents portées par le rotor, et par rapport auxquelles lames courbées les pointes de dents émergent. Lorsque le rotor tourne, les dents ramassent les végétaux au niveau du sol, les soulèvent et les projettent vers l'arrière le long de la surface de guidage. Dans la première position prévue sur cette machine, l'extrémité frontale inférieure du dispositif de guidage est fortement relevée au-dessus du sol pour permettre le passage d'un andain de fort volume vers le dispositif de ramassage. Dans cette première position, la partie intermédiaire du dispositif de guidage s'étend sensiblement à l'horizontale au-dessus du dispositif de ramassage et sensiblement à la même hauteur que l'extrémité frontale inférieure, d'où la partie intermédiaire se trouve fort éloignée des pointes de dents du dispositif de ramassage. Il en résulte que dans cette première position, la partie intermédiaire du dispositif de guidage ne peut maintenir convenablement les végétaux en contact avec les dents qui se situent à l'avant et sur le dessus du dispositif de ramassage. Par suite, les végétaux sont entraînés de manière irrégulière vers le dispositif de traitement placé en aval. De plus, une accumulation néfaste de végétaux peut se produire entre le dispositif de ramassage et le dispositif de traitement, ou au sein de ce dernier. La machine connue comporte également une deuxième position prévue notamment pour le ramassage d'andains légers ou de faible volume. Dans cette position, l'extrémité frontale inférieure du dispositif de guidage est davantage rapprochée du sol que dans la première position. Elle reste néanmoins à une hauteur trop importante du sol pour empêcher les projections de végétaux vers l'avant lorsque le rotor à dents tourne, ces projections existant en raison de la légèreté des végétaux ramassés. Ces projections retombent de manière aléatoire sur l'andain non encore ramassé situé à l'avant de la machine et le rendent irrégulier. Par suite, l'alimentation en végétaux du dispositif de ramassage et du dispositif de traitement en aval est irrégulière, par exemple sous forme de paquets de volume variable. Cet inconvénient existe également lorsque la machine ramasse des végétaux étalés au sol en brins courts. Dans la deuxième position de la machine connue, la partie intermédiaire et la partie arrière sont fortement rapprochées du dispositif de ramassage au point qu'elles sont situées plus bas que les pointes de dents et touchent quasiment la surface de guidage. En conséquence, le flux de végétaux légers est freiné lorsqu'il passe entre le dispositif de ramassage et lesdites parties intermédiaire et arrière, ce qui diminue le rendement horaire de la machine.

La présente invention a pour but de proposer une machine agricole pour la récolte de fourrage qui ne présente pas les inconvénients précités. Selon l'invention, un fort volume de végétaux, lourds, à brins longs ou encore sous forme d'andain, peut passer sous l'extrémité frontale inférieure du dispositif de guidage, en aval de laquelle ces végétaux sont bien repris par les dents du dispositif de ramassage. La machine selon l'invention permet aussi à des végétaux à brins courts ou légers, étalés au sol sur une faible hauteur, d'être intégralement ramassés en évitant qu'une partie d'entre eux ne se retrouve projetée vers l'avant. Ces végétaux ramassés sont ensuite déplacés avec rapidité vers le dispositif de traitement et dirigés et/ou répartis sur celui-ci de manière optimale.

A cet effet, une importante caractéristique de l'invention consiste en ce que le premier moyen de liaison et le deuxième moyen de liaison sont géométriquement et/ou élastiquement configurés de sorte que dans la première position, l'extrémité frontale inférieure soit fortement relevée au-dessus du sol et que la partie intermédiaire soit rapprochée des pointes de dents du dispositif de ramassage, et que dans la deuxième position, l'extrémité frontale inférieure soit fortement rapprochée du sol et que la partie intermédiaire et la partie arrière soient éloignées des pointes de dents du dispositif de ramassage.

Dans la première position, les pointes de dents coopèrent avec la quasi-totalité des végétaux qui passent entre le dispositif de ramassage et la partie intermédiaire du dispositif de guidage. Le risque de voir des végétaux stationner entre ce dernier et les pointes de dents est considérablement réduit. De plus, les végétaux ramassés alimentent le dispositif de traitement avec régularité. De manière avantageuse, dans cette première position, l'extrémité arrière du dispositif de guidage est aussi rapprochée des pointes de dents du dispositif de ramassage, dont les dents pénètrent le flux de végétaux et l'entraînent sur toute l'étendue du dispositif de guidage située au-dessus du dispositif de ramassage.

Dans la deuxième position, l'éloignement de la partie intermédiaire et de la partie arrière par rapport au dispositif de ramassage, augmente la section de passage des végétaux en aval de l'extrémité frontale inférieure du dispositif de guidage. Ainsi, des végétaux légers ou à brins courts sont accélérés et ont, à leur sortie du dispositif de ramassage, une vitesse importante pour être projetés à l'endroit optimal sur le dispositif de traitement ou pour être répartis sur toute la surface de celui-ci. On évite ainsi que de tels végétaux parviennent seulement à l'entrée du dispositif de traitement, voire s'accumulent entre ce dernier et le dispositif de ramassage. En particulier lorsque le dispositif de traitement déplace les végétaux ramassés transversalement à une direction d'avancement de la machine pour former un andain, l'invention permet à ce dernier de présenter un aspect régulier.

D'autres caractéristiques et avantages de l'invention ressortiront de la description ci-après avec référence aux dessins annexés qui représentent plusieurs exemples non limitatifs de réalisation de la machine selon l'invention.

Sur ces dessins :
- la figure 1 représente une vue d'ensemble d'un exemple de réalisation de l'invention en configuration de travail ;
- la figure 2 représente une vue latérale de l'exemple de réalisation dans la première position ;
- la figure 3 représente une vue latérale de l'exemple de réalisation dans une position rapprochée de la première position ;
- la figure 4 représente une vue latérale de l'exemple de réalisation dans une position située entre la première position et la deuxième position ;
- la figure 5 représente une vue latérale de l'exemple de réalisation dans une position rapprochée de la deuxième position ;
- la figure 6 représente une vue latérale de l'exemple de réalisation dans la deuxième position ;
- la figure 7 représente une vue latérale d'un autre exemple de réalisation de l'invention.

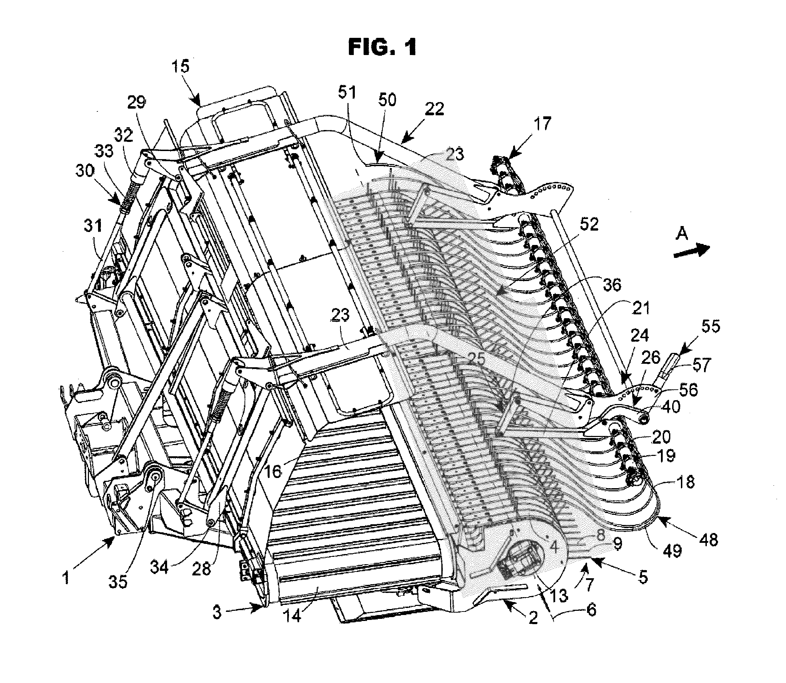

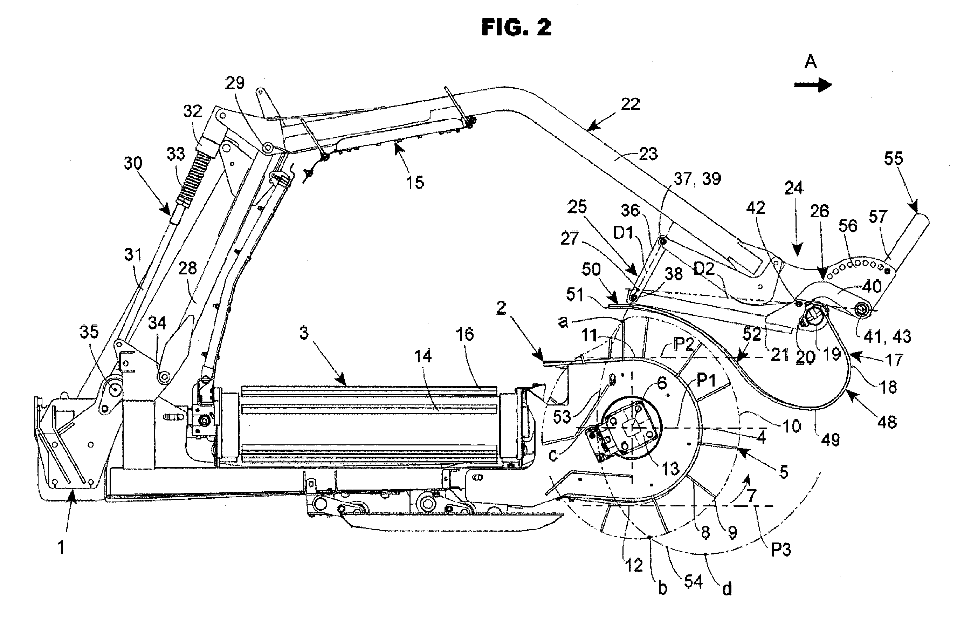

La machine agricole selon l'invention comporte un bâti (1) pouvant être relié à un tracteur, non représenté, permettant de la déplacer dans une direction d'avancement (A). Dans la description qui suit, les notions « gauche », « droite », « avant », « arrière », « aval » et « postérieur » sont définies par rapport à la direction d'avancement (A), et les notions « haut », « dessus » et « bas » sont définies par rapport au sol. Comme cela ressort de la figure 1, ce bâti (1) porte un dispositif de ramassage (2) de végétaux au sol et un dispositif de traitement (3) placé en aval. Le dispositif de ramassage (2) comporte une surface de guidage (4) courbée qui entoure un rotor (5) animé autour d'un axe de rotation (6) dans le sens (7) antihoraire, vu depuis la droite du dispositif de ramassage (2). Ce dernier comporte également des dents (8) qui ramassent les végétaux au niveau du sol, les soulèvent et les projettent vers l'arrière. Les dents (8) comportent des pointes de dents (9) qui décrivent une enveloppe courbe (10) lorsque les dents (8) sont animées. Les dents (8) émergent au moins partiellement de la surface de guidage (4). La surface de guidage (4) comporte une extrémité haute (11) et une extrémité basse (12) situées sensiblement à l'aplomb de l'axe de rotation (6) du rotor (5). Dans les exemples de réalisation des figures, le dispositif de ramassage (2) est du type pick-up, dont les dents (8) sont portées par le rotor (5) et émergent de la surface de guidage (4) formée par une multitude de lames courbées autour du rotor (5) et placées les unes à côté des autres suivant l'axe de rotation (6). Les dents (8) se déplacent entre ces lames. Dans ces exemples des figures, la surface de guidage (4) est fixe. Les dents (8) sont commandées de telle sorte que l'enveloppe courbe (10) décrite par le déplacement des pointes de dents (9) n'est pas cylindrique. En effet, ainsi qu'il ressort par exemple de la figure 2, les dents (8) s'escamotent à l'intérieur de la surface de guidage (4) après en avoir franchi l'extrémité haute (11). De cette manière, les dents (8) libèrent progressivement les végétaux qui approchent du dispositif de traitement (3). Un tel déplacement des dents (8) est obtenu au moyen par exemple d'un chemin de came fixe à l'intérieur duquel se déplacent des galets portés par des cames reliées aux dents (8). Alternativement, des dents (8) non commandées sont aussi envisageables. Dans ce cas, l'enveloppe courbe (10) décrite par les pointes de dents (9) est un cylindre centré sur l'axe de rotation (6) du rotor (5). D'autres formes de réalisation du dispositif de ramassage (2) restent possibles. Ce dernier peut ainsi comporter une bande souple enroulée autour d'un premier rotor placé à l'avant du dispositif de ramassage (2) et autour d'un deuxième rotor placé plus en arrière. Ce deuxième rotor peut notamment être placé, au travail, à une distance du sol plus élevée que le premier rotor, de manière à ce que le dispositif de ramassage (2) déplace les végétaux vers l'arrière et vers le haut en direction du dispositif de traitement (3). Une telle bande comporte des dents, des fourches ou des crochets qui peuvent être fixés ou articulés à la bande. Dans cette forme de réalisation, la surface de guidage (4) est constituée par la surface de la bande en contact avec les végétaux. La surface de guidage (4) est dans ce cas animée. L'axe de rotation (6) du rotor (5) est celui du premier rotor. L'extrémité haute (11) et l'extrémité basse (12) de la surface de guidage (4) se situent sensiblement à l'aplomb de l'axe de rotation (6) du premier rotor, au niveau de la partie haute respectivement la partie basse du premier rotor.

L'entraînement du dispositif de ramassage (2) est réalisé au moyen de tout organe approprié. Il peut s'agir d'un moteur (13) hydraulique ou électrique, lequel moteur (13) peut être logé à l'intérieur du rotor ou bien dépasser latéralement de celui-ci. Le dispositif de ramassage (2) peut également être animé au moyen d'une chaîne ou d'une courroie, ou encore d'une cascade de pignons. Une combinaison de tels moyens est aussi possible.

Le dispositif de traitement (3) des végétaux ramassés se situe à l'arrière et à proximité du dispositif de ramassage (2) de sorte qu'il reçoive les végétaux projetés vers l'arrière par celui-ci. Dans les exemples de réalisation des figures, ce dispositif de traitement (3) comporte un convoyeur à bande (14). Cette bande (14) est entraînée durant le travail de sorte qu'elle déplace lesdits végétaux transversalement au dispositif de ramassage (2). Les végétaux sont alors redéposés au sol sous la forme d'un andain en vue de leur reprise ultérieure. Sur le côté arrière du dispositif de traitement (3) est disposé un déflecteur (15) qui comporte une portion sensiblement verticale pour limiter la projection vers l'arrière des végétaux. Le déflecteur (15) peut également comporter une autre portion sensiblement horizontale pour limiter les projections de végétaux vers le haut. Dans les exemples de réalisation des figures, cette autre portion est placée dans la continuité de la portion sensiblement verticale, au-dessus du convoyeur à bande (14). Le dispositif de traitement (3) peut aussi être un convoyeur à rouleaux, ces derniers étant par exemple montés sur des axes de rotation orientés, au travail, sensiblement dans la direction d'avancement (A). De tels rouleaux sont de préférence placés les uns à côté des autres et à faible distance les uns des autres, et peuvent être animés de telle sorte que les végétaux soient déplacés transversalement au dispositif de ramassage (2).

L'entraînement du dispositif de traitement (3), par exemple du convoyeur à bande (14) ou desdits rouleaux, est réalisé au moyen de tout organe convenable. Il peut s'agir d'un moteur hydraulique ou électrique. Une animation au moyen d'une chaîne ou d'une courroie, ou encore d'une cascade de pignons, est aussi envisageable. Une combinaison de tels moyens est bien entendu possible. Ces moyens peuvent être actionnés dans un sens de fonctionnement ou dans l'autre. Notamment dans le cas d'un convoyeur à bande (14) ou à rouleaux, les végétaux peuvent de la sorte être transférés vers le côté gauche ou le côté droit de la machine, par exemple pour former un andain d'un côté ou de l'autre.

Le dispositif de traitement (3) comporte une enveloppe supérieure (16). Dans le cas d'un convoyeur à bande (14), cette enveloppe (16) est constituée par la surface supérieure de la bande (14) qui reçoit les végétaux déplacés par le dispositif de ramassage (2). Dans les exemples de réalisation des figures, cette surface supérieure s'étend, au travail, de manière sensiblement parallèle au sol. Sur la figure 1, on aperçoit que le convoyeur à bande (14) comporte des barrettes rapportées sur la bande (14). Ces barrettes sont orientées sensiblement perpendiculairement à la direction de déplacement de la bande (14). Ces barrettes émergent de la surface supérieure de la bande (14). Dans le cas d'un convoyeur à rouleaux, l'enveloppe supérieure (16) est une surface fictive sensiblement plane qui repose sur le dessus des rouleaux.

La machine peut comporter plusieurs dispositifs de ramassage (2) et dispositifs de traitement (3) placés côte à côte, en vue d'augmenter sa largeur de travail.

Un dispositif de guidage (17) des végétaux est situé au moins partiellement au-dessus et à distance réduite du dispositif de ramassage (2). Dans les exemples de réalisation des figures, le dispositif de guidage (17) comporte des tiges (18) souples qui sont sensiblement parallèles entre elles et qui s'étendent depuis l'avant du dispositif de ramassage (2) vers l'arrière. Lors du ramassage par les dents (8), les végétaux viennent en contact avec les tiges (18) et glissent le long de celles-ci vers l'arrière. Ces tiges (18) maintiennent en sus les végétaux en prise avec les dents (8), au moins sur une partie de la hauteur des dents (8). Les tiges (18) du dispositif de guidage (17) sont fixées sur une barre (19). Elles comportent chacune une partie ressort (20) formée par exemple par un enroulement en forme de spire du fil métallique qui compose la tige (18). Dans les exemples de réalisation des figures, chaque partie ressort (20) est enfilée sur la barre (19) et tenue par un boulon. Ainsi qu'il ressort de la figure 1, la barre(19) est liée à deux barrettes (21) qui s'étendent vers l'arrière depuis la barre (19). Chaque barrette (21) est située sous une structure (22) portant le dispositif de guidage (17). Cette structure (22) est reliée au bâti (1) qui la porte, et elle se situe au moins partiellement au-dessus du dispositif de ramassage (2). Cette structure (22) comporte des bras (23) qui portent le dispositif de guidage (17) et s'étendent vers l'arrière par-dessus le dispositif de traitement (3). Chaque barrette (21) du dispositif de guidage (17) est portée de manière mobile par le bras (23) correspondant au moyen d'un dispositif de déplacement (24) comportant deux moyens de liaison (25 et 26). Le dispositif de guidage (17) est ainsi déplaçable par rapport au dispositif de ramassage (2) au moyen du dispositif de déplacement (24) porté par le bras (23), autour d'un centre instantané de rotation principal (27). Lors des déplacements du dispositif de guidage (17), le centre instantané de rotation principal (27) se déplace suivant une loi particulière dictée par l'agencement du dispositif de déplacement (24), lequel agencement fait l'objet d'une description détaillée dans la suite du texte.

Les bras (23) sont reliés près de leurs extrémités arrière à des supports (28) liés au bâti (1). Ces bras (23) sont ainsi éloignés du dispositif de ramassage (2) et du dispositif de traitement (3) afin de ne pas gêner les déplacements des végétaux. Les bras (23) sont articulés par rapport au bâti (1) au moyen d'axes (29) sensiblement horizontaux. Ces axes (29) sont portés par les supports (28). Dans une configuration de travail illustrée notamment à la figure 1, ces axes (29) sont positionnés au-dessus de la partie arrière du dispositif de traitement (3). Les bras (23) peuvent pivoter vers le haut d'un certain angle autour de ces axes (29).

L'angle de pivotement des bras (23) autour de ces axes d'articulation (29) est limité au moyen de butées (30). Chacune de ces butées (30) est constituée par une tige (31) dont l'une des extrémités est articulée sur le bâti (1) et l'autre extrémité est engagée dans un fourreau (32) qui est articulé sur l'extrémité d'un des bras (23). L'extrémité engagée dans le fourreau (32) est pourvue d'un épaulement situé entre deux arrêts placés aux deux extrémités dudit fourreau (32). Lesdits arrêts limitent le débattement possible du fourreau (32) par rapport à l'épaulement de la tige (31) et par conséquent l'angle de pivotement des bras (23) autour des axes d'articulation (29). Entre la tige (31) et le fourreau (32) de chaque butée (30) est disposé un ressort de compression (33). Celui-ci exerce une pression sur le fourreau (32) correspondant qui tend à faire pivoter les bras (23) et le dispositif de guidage (17) en direction du dispositif de ramassage (2) afin de maintenir le dispositif de guidage (17) en contact avec les végétaux déplacés. En sus, ce ressort (33) amortit les déplacements des bras (23) autour des axes d'articulation (29).

Les supports (28) des bras (23) sont liés au bâti (1) au moyen d'axes d'articulation (34) sensiblement horizontaux situés à l'arrière du dispositif de traitement (3) et autour desquels ils peuvent être déplacés. Ces supports (28) forment ainsi avec les butées (30), les extrémités des bras (23) et des parties du bâti (1) des parallélogrammes déformables. Ces parallélogrammes permettent de déplacer et de maintenir les bras (23) et le dispositif de guidage (17) dans la configuration de travail et dans une configuration de transport, notamment. A cet effet, la machine peut comporter entre le bâti (1) et les supports (28) des vérins, par exemple hydrauliques, non représentés, permettant de déplacer ces supports (28) autour des axes (34). Ces vérins peuvent être commandés depuis le tracteur afin qu'ils effectuent lesdits déplacements.

Cet agencement permet ainsi de transposer la machine dans la configuration de transport sur route dans laquelle ses dimensions sont réduites. Dans cette configuration, par pivotement des supports (28) autour des axes (34) dans le sens horaire, vu depuis la droite, les bras (23) sont amenés dans une position très proche du dispositif de traitement (3), le dispositif de guidage (17) se situant alors sensiblement dans le prolongement du dispositif de ramassage (2) et ces trois dispositifs (2, 3 et 17) étant en sus rapprochés ensemble de la verticale par pivotement autour d'un axe sensiblement horizontal (35) du bâti (1). Ce déplacement vers la verticale est effectué au moyen d'un vérin, par exemple hydraulique, placé sous le dispositif de traitement (3) et s'appuyant sur le bâti (1). Ainsi placés à la verticale, ces dispositifs (2, 3 et 17) peuvent ensuite être repliés ensemble vers l'arrière ou vers l'avant avec une partie du bâti (1), autour d'un axe sensiblement vertical, afin d'être orientés dans la direction d'avancement (A).

Le dispositif de déplacement (24) comporte un premier moyen de liaison (25) et un deuxième moyen de liaison (26) du dispositif de guidage (17) à la structure (22). Dans l'exemple de réalisation des figures 1 à 6, le premier moyen de liaison (25) comporte une première bielle (36) reliée à la structure (22) par une première articulation (37) et au dispositif de guidage (17) par une deuxième articulation (38). Le premier moyen de liaison (25) autorise le dispositif de guidage (17) à pivoter autour d'un premier centre instantané de rotation (39). Celui-ci est réel car constitué, dans cet exemple, par un centre de la première articulation (37). Toujours dans l'exemple des figures 1 à 6, le deuxième moyen de liaison (26) comporte une deuxième bielle (40) reliée à la structure (22) par une troisième articulation (41) et au dispositif de guidage (17) par une quatrième articulation (42). Le deuxième moyen de liaison (26) autorise le dispositif de guidage (17) à pivoter autour d'un deuxième centre instantané de rotation (43). Ce dernier, également réel, est constitué dans cet exemple par un centre de la troisième articulation (41). Ces différentes articulations (37, 38, 41 et 42) sont par exemple constituées par des axes s'étendant, au travail, sensiblement perpendiculairement à la direction d'avancement (A) de la machine. Dans l'exemple de réalisation des figures 1 à 6, une première droite (D1) passant par les première et deuxième articulations (37 et 38), croise une deuxième droite (D2) passant par les troisième et quatrième articulations (41 et 42), en un point constituant le centre instantané de rotation principal (27) autour duquel le dispositif de guidage (17) peut pivoter.

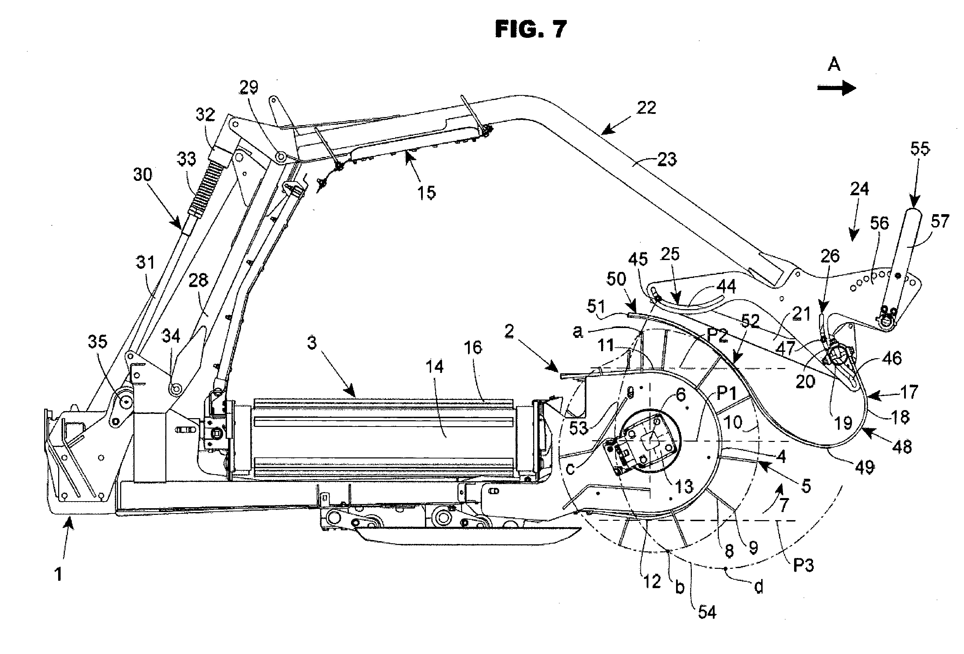

Suivant un autre exemple de réalisation de l'invention illustré par la figure 7, le premier moyen de liaison (25) comporte un premier chemin de guidage (44) lié à la structure (22). A l'intérieur de ce premier chemin (44), un premier axe (45) lié au dispositif de guidage (17) peut se déplacer autour du premier centre instantané de rotation (39). Dans cet exemple, le bras (23) porte une tôle latérale dans laquelle est pratiquée une lumière formant ledit premier chemin de guidage (44). A l'intérieur de cette lumière est inséré le premier axe (45) et celui-ci peut coulisser dans la lumière. Alternativement, le premier chemin de guidage (44) peut être formé par une piste en relief, semblable à un chemin de came, à l'intérieur de laquelle un galet monté à pivotement autour dudit premier axe (45) peut rouler. Le premier centre instantané de rotation (39) a une position qui est dictée par la géométrie du premier chemin de guidage (44). Ce premier centre instantané de rotation (39) est virtuel. Dans l'exemple de la figure 7, le premier chemin de guidage (44) présente une forme courbe quelconque, d'où le premier centre instantané de rotation (39) virtuel se déplace lors des mouvements du dispositif de déplacement (24). Toutefois, la forme du premier chemin de guidage (44) peut suivre un arc de cercle. Dans ce cas, le premier centre instantané de rotation (39) virtuel est fixe et confondu avec le centre géométrique dudit arc de cercle. Dans l'exemple de la figure 7, le deuxième moyen de liaison (26) comporte un deuxième chemin de guidage (46) lié à la structure (22), à l'intérieur duquel un deuxième axe (47) lié au dispositif de guidage (17) peut se déplacer autour du deuxième centre instantané de rotation (43). Les différentes formes de réalisation dudit deuxième chemin de guidage (46) suivent celles du premier chemin de guidage (44). De même, le deuxième centre instantané de rotation (43), virtuel dans cet exemple, peut être fixe ou mobile. Une combinaison d'un premier chemin de guidage (44) de forme circulaire avec un deuxième chemin de guidage (46) de forme courbe non circulaire, est tout à fait possible.

Selon d'autres possibilités de réalisation, non représentées, l'un desdits premier et deuxième moyens de liaison (25 et 26) peut comporter une bielle articulée entre le dispositif de guidage (17) et la structure (22), tandis que l'autre comporte un chemin de guidage avec un axe déplaçable tel que décrit précédemment.

Le premier et le deuxième moyens de liaison (25 et 26) peuvent encore suivre d'autres formes de réalisation, non représentées. C'est ainsi qu'au moins l'un desdits moyens de liaison (25 et 26) peut être un élément de forme allongée, tel un barreau ou un levier, dont la géométrie et/ou le matériau sont configurés pour que ledit moyen de liaison (25, 26) puisse se déformer élastiquement suivant une loi définie, de sorte que le dispositif de guidage (17) se déplace par rapport au dispositif de ramassage (2) suivant la cinématique propre à l'invention. Par exemple, le moyen de liaison (25, 26) peut être une lame métallique de faible épaisseur, fixée au dispositif de guidage (17) et à la structure (22), et susceptible de fléchir dans un plan parallèle à la direction d'avancement (A). Le moyen de liaison (25, 26) peut aussi être un barreau en matériau élastomère, par exemple en caoutchouc, dont la géométrie -longueur, section, présence de nervures notamment-et/ou les propriétés du matériau permettent audit barreau de se déformer de manière contrôlée.

Ainsi qu'il ressort des figures, le dispositif de guidage (17) comporte une partie frontale (48) de forme bombée en direction du sol. Cette partie frontale (48) est placée à l'avant du dispositif de ramassage (2) de sorte que la partie frontale (48) passe au-dessus des végétaux présents au sol avant que ces derniers ne soient en prise avec le dispositif de ramassage (2) pour être ramassés par celui-ci. Cette partie frontale (48) comporte une extrémité frontale inférieure (49). Dans les exemples de réalisation des figures, cette extrémité frontale inférieure (49) est constituée par le sommet, orienté vers le sol, de la forme bombée de la partie frontale (48) des tiges (18) souples. Le dispositif de guidage (17) comporte également une partie arrière (50) délimitée par une extrémité arrière (51) constituée, dans l'exemple des figures, par l'extrémité postérieure des tiges (18) souples formant le dispositif de guidage (17). Une partie intermédiaire (52) relie la partie frontale (48) à la partie arrière (50). La partie intermédiaire (52) est sensiblement parallèle à l'enveloppe courbe (10) décrite par les pointes de dents (9).

Outre une multitude de tiges (18) souples juxtaposées, le dispositif de guidage (17) peut être formé par une tôle courbée s'étendant depuis l'avant du dispositif de ramassage (2) vers l'arrière. Une combinaison de tiges (18) souples et d'une ou plusieurs tôles est envisageable. Le dispositif de guidage (17) peut aussi comporter au moins un rouleau frontal monté à pivotement autour d'un axe s'étendant, au travail, perpendiculairement à la direction d'avancement (A). Ce rouleau peut tourner autour dudit axe de manière libre ou animée au moyen d'un actionneur, tel un moteur. La partie frontale (48) du dispositif de guidage (17) est alors constituée par le rouleau, dont la partie inférieure matérialise la forme bombée de ladite partie frontale (48). En arrière du rouleau s'étendent par exemple des tiges souples, une tôle, ou une combinaison de ces éléments, de manière à constituer la partie intermédiaire (52) et la partie arrière (50) du dispositif de guidage (17).

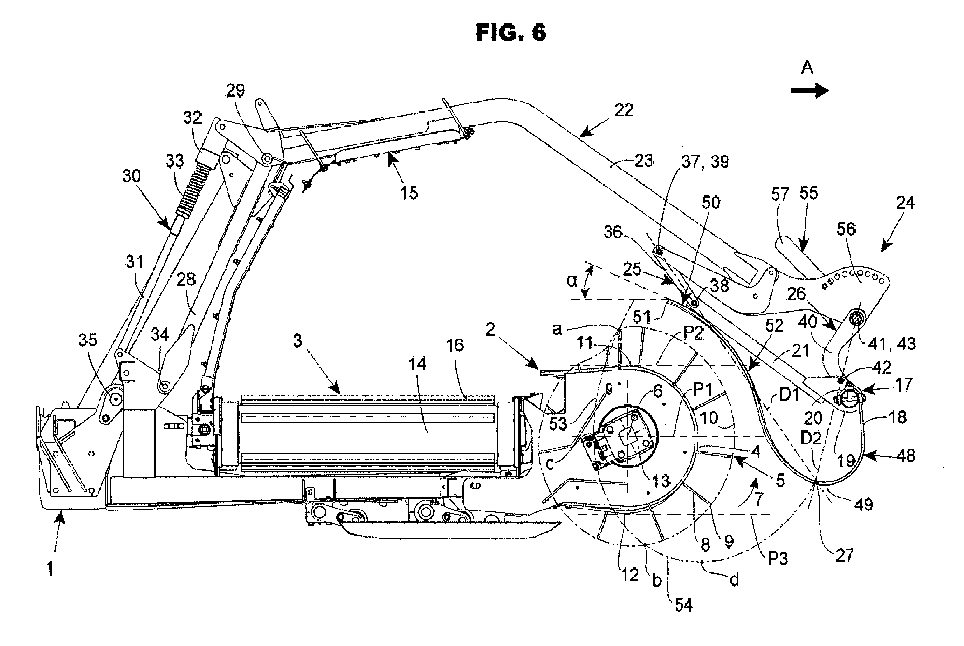

Le dispositif de déplacement (24) peut être placé dans au moins une première position et une deuxième position. Selon l'invention, le premier moyen de liaison (25) et le deuxième moyen de liaison (26) sont géométriquement et/ou élastiquement configurés de sorte que dans la première position illustrée à la figure 2, l'extrémité frontale inférieure (49) du dispositif de guidage (17)soit fortement relevée au-dessus du sol et que la partie intermédiaire (52) soit rapprochée des pointes de dents (9) du dispositif de ramassage (2), et que dans la deuxième position représentée à la figure 6, l'extrémité frontale inférieure (49) soit fortement rapprochée du sol et que la partie intermédiaire (52) et la partie arrière (50) soient éloignées des pointes de dents (9) du dispositif de ramassage (2). Par « géométriquement », on entend que les moyens de liaison (25 et 26) sont, notamment en termes de dimensions, de forme et de positionnement des articulations au dispositif de guidage (17) et à la structure (22), configurés pour obtenir les première et deuxième positions telles que décrites précédemment. Par « élastiquement », on entend que les moyens de liaison (25 et 26) ont une capacité à se déformer de manière élastique en fonction de leurs caractéristiques dimensionnelles et des propriétés intrinsèques au(x) matériau(x) qui les compose(nt).

De manière avantageuse, dans la première position, l'extrémité arrière (51) du dispositif de guidage (17) est également rapprochée des pointes de dents (9) du dispositif de ramassage (2). Ainsi, les dents (8) pénètrent le flux de végétaux et l'entraînent sur toute l'étendue du dispositif de guidage (17) située au-dessus du dispositif de ramassage (2).

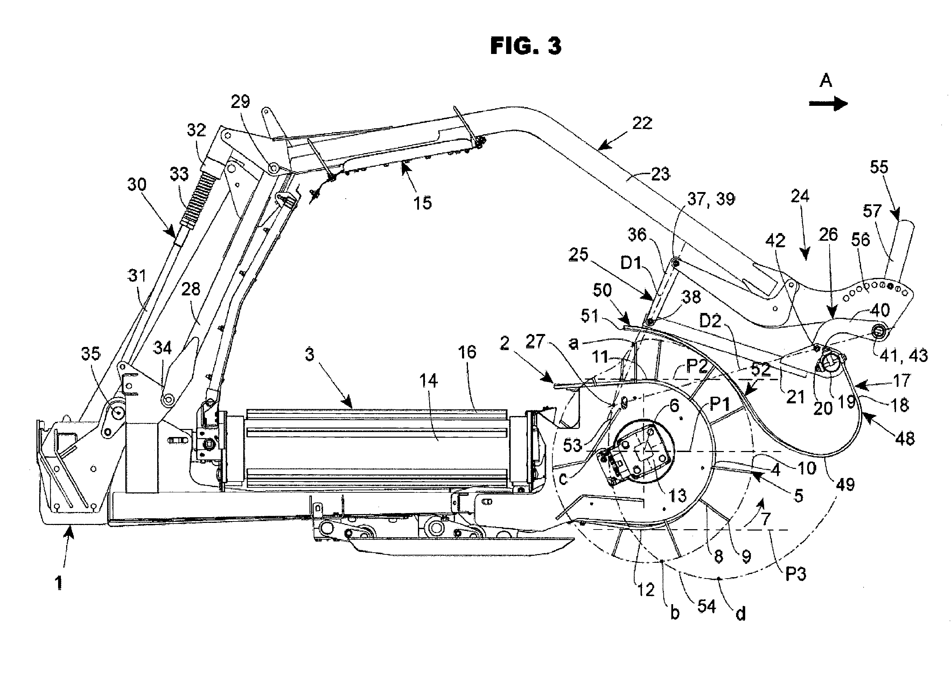

Dans la première position, le centre instantané de rotation principal (27) est localisé au voisinage de l'extrémité arrière (51) du dispositif de guidage (17). De cette manière, lorsque le dispositif de guidage (17) est déplacé au voisinage de la première position, il pivote sensiblement autour de son extrémité arrière (51) de manière à ajuster l'orientation de la partie arrière (50) par rapport au dispositif de traitement (3). Ceci ressort d'une comparaison de la figure 2, montrant la première position, avec la figure 3, représentant une position rapprochée de la première position.

Dans la première position, la partie arrière (50) du dispositif de guidage (17) s'étend de préférence sensiblement parallèlement à l'enveloppe supérieure (16) du dispositif de traitement (3), c'est-à-dire, dans les exemples de réalisation des figures, sensiblement parallèlement à la surface supérieure de la bande (14) qui le compose. En revanche, la figure 3 montre que, quand le dispositif de guidage (17) s'éloigne quelque peu de la première position (figure 2), sa partie arrière (50) s'incline par rapport à ladite bande (14). Ainsi, par le réglage du dispositif de guidage (17) au proche voisinage de la première position, l'utilisateur peut déterminer finement la manière dont les végétaux sont projetés en direction du dispositif de traitement (3), en fonction par exemple d'une proportion variable de brins courts dans l'andain ramassé.

En sus, il ressort de la figure 2 que dans la première position, l'extrémité arrière (51) du dispositif de guidage (17) est située, relativement à la direction d'avancement (A), en arrière de l'extrémité haute (11) de la surface de guidage (4). Cette caractéristique permet aux végétaux déplacés en direction du dispositif de traitement (3), d'être guidés au-delà de ladite extrémité haute (11) tandis qu'ils sont simultanément, et progressivement, libérés par les dents (8) qui s'escamotent en arrière de ladite extrémité haute (11).

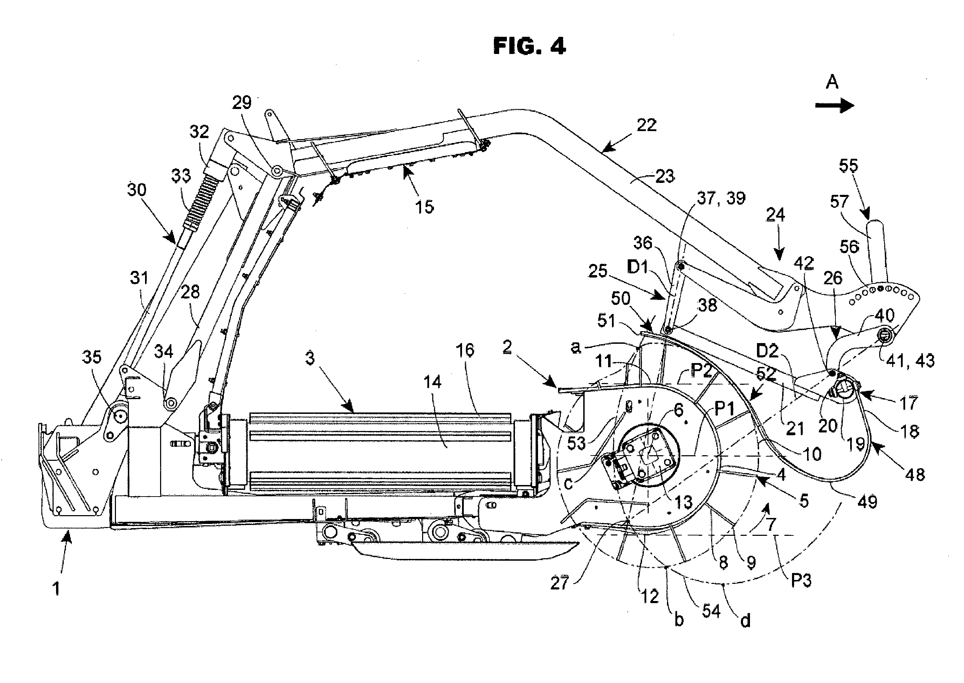

Lorsque le dispositif de déplacement (24) est déplacé entre la première position et la deuxième position, le centre instantané de rotation principal (27) se déplace le long d'une première portion de courbe (53) située à l'intérieur de l'enveloppe courbe (10) décrite par les pointes de dents (9). Il ressort en effet que dans les positions intermédiaires du dispositif de guidage (17) illustrées aux figures 3 et 4, le centre instantané de rotation principal (27) se trouve sur cette première portion de courbe(53) délimitée par les points d'intersection (a) et (b) avec ladite enveloppe courbe (10). De cette manière, lorsque le centre instantané de rotation principal (27) se déplace le long de la première portion de courbe (53), la partie intermédiaire (52) du dispositif de guidage (17) se déplace le long de ladite enveloppe courbe (10) et est sensiblement tangente à cette dernière. La section de passage des végétaux entre le dispositif de guidage (17) et la surface de guidage (4) reste donc sensiblement constante, et les végétaux restent bien en prise avec les dents (8). Les végétaux sont donc acheminés avec régularité vers le dispositif de traitement (3), sans risque de formation de paquets ou de bourrages. Le réglage du dispositif de guidage (17) dans les positions des figures 3 et 4 est particulièrement adapté à des conditions de fourrage de moyenne densité ou comportant un certain mélange de brins courts et de brins longs. En effet, au cours du déplacement du centre instantané de rotation principal(27) le long de la première portion de courbe (53), la partie arrière (50) du dispositif de guidage (17) voit son inclinaison varier par rapport à l'enveloppe supérieure (16) du dispositif de traitement (3). Ceci permet de projeter les végétaux à l'endroit optimal sur le dispositif de traitement (3). Dans le même temps, la partie frontale (48) s'étend à une hauteur plus ou moins importante du sol. L'utilisateur a ainsi la possibilité de réduire plus ou moins la tendance des végétaux à être projetés en avant du dispositif de ramassage (2).

Dans la deuxième position représentée figure 6, le centre instantané de rotation principal (27) est localisé au voisinage de l'extrémité frontale inférieure (49) du dispositif de guidage (17). De cette manière, le déplacement du dispositif de guidage (17) de la première vers la deuxième position se termine par un mouvement essentiellement de pivotement autour de l'extrémité frontale inférieure (49) dont la hauteur par rapport au sol a atteint un minimum. Par ce pivotement, la partie intermédiaire (52) et la partie arrière (50) sont éloignées des pointes de dents (9) du dispositif de ramassage (2). De la sorte, dans la deuxième position, la partie intermédiaire (52) est de préférence éloignée des pointes de dents (9) d'environ deux fois la distance séparant les pointes de dents (9) de la surface de guidage (4). La section de passage des végétaux en aval de l'extrémité frontale inférieure (49) est donc importante, ce qui permet à des végétaux légers ou à brins courts d'acquérir une vitesse importante à leur sortie du dispositif de ramassage (2).

De préférence, dans la deuxième position, la partie arrière (50) du dispositif de guidage (17) forme avec l'enveloppe supérieure (16) du dispositif de traitement (3) un angle (α) compris entre 10° et 45°. Les végétaux, projetés à grande vitesse et de manière oblique par rapport au dispositif de traitement (3), retombent ainsi sur ce dernier à l'endroit optimal.

Il est en sus avantageux que dans cette deuxième position, l'extrémité arrière (51) du dispositif de guidage (17) soit située, relativement à la direction d'avancement (A), en avant de l'extrémité haute (11) de la surface de guidage (4). De cette façon, les végétaux ne sont pas freinés ni rabattus vers le dispositif de traitement (3) lorsqu'ils commencent à être libérés par les dents (8) en arrière de ladite extrémité haute (11).

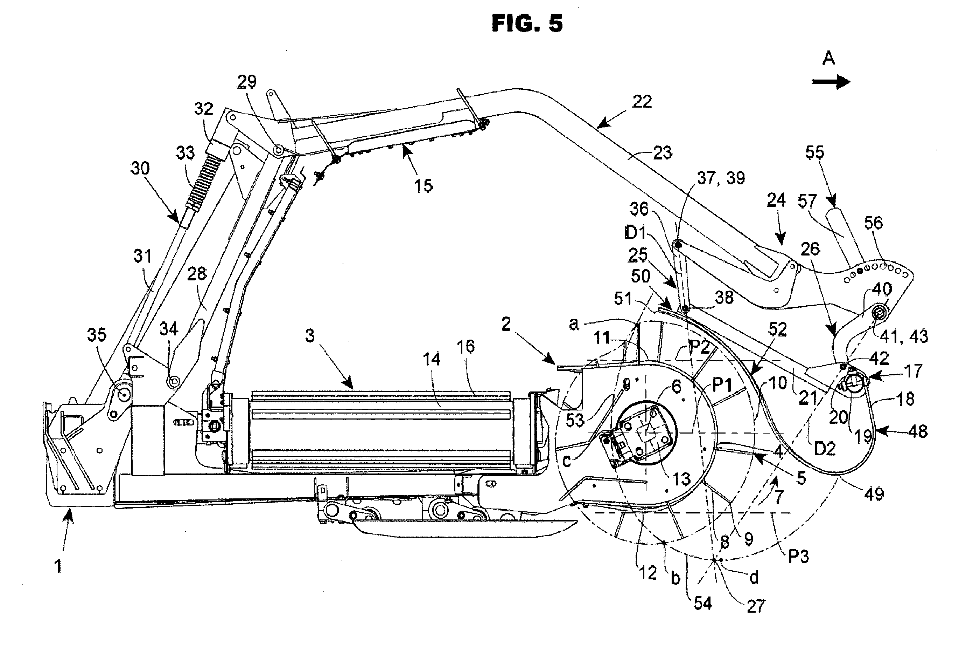

Lorsque le dispositif de déplacement (24) est déplacé entre la première position et la deuxième position, le centre instantané de rotation principal (27) se déplace le long d'une deuxième portion de courbe (54) inclinée vers le sol dans la direction d'avancement (A) de la machine. Dans les positions intermédiaires du dispositif de guidage (17) représentées aux figures 4 et 5, le centre instantané de rotation principal (27) se situe sur cette deuxième portion de courbe (54) délimitée par les points (c) et (d). La comparaison de ces figures permet de constater qu'au cours du déplacement de la position de la figure 4 vers celle de la figure 5, la partie intermédiaire (52) du dispositif de guidage (17) commence à s'éloigner des pointes de dents (9) tandis que l'extrémité frontale inférieure (49) est située à une distance du sol proche du minimum atteint dans la deuxième position. De cette manière, on obtient une transition harmonieuse entre le mouvement du dispositif de guidage (17) le long des pointes de dents (9) et le mouvement de pivotement final autour de l'extrémité frontale inférieure (49).

Ainsi qu'il ressort de la figure 4, la première portion de courbe (53) et la deuxième portion de courbe (54) sont de préférence au moins partiellement confondues. En effet, le point (c) se situe plus haut que le point (b).

Le dispositif de déplacement (24) est configuré de sorte que dans la première position, l'extrémité frontale inférieure (49) du dispositif de guidage (17) se situe à une hauteur importante du sol, par exemple pour passer au-dessus d'un andain de fort volume. Un tel dégagement est avantageusement obtenu par le fait que, dans cette première position, l'extrémité frontale inférieure (49) du dispositif de guidage (17) se situe entre un premier plan (P1) horizontal passant par l'axe de rotation (6) du rotor (5) et un deuxième plan (P2) horizontal passant par l'extrémité haute (11) de la surface de guidage (4).

Dans la deuxième position, l'extrémité frontale inférieure (49) est fortement rapprochée du sol. A cette fin, celle-ci se situe, dans cette deuxième position, entre le premier plan (P1) horizontal passant par l'axe de rotation (6) du rotor (5) et un troisième plan (P3) horizontal passant par l'extrémité basse (12) de la surface de guidage (4).

Le dispositif de déplacement (24) peut être maintenu dans les première et deuxième positions au moyen d'un dispositif de réglage (55) à commande directe ou distante. Sur les figures, le dispositif de réglage (55) est à commande directe. L'un des bras (23) porte un secteur (56) comportant des crans ou des trous. Dans l'exemple de réalisation des figures 1 à 6, ce secteur (56) supporte la bielle (40) située à l'avant du dispositif de guidage (17). Cette bielle (40) est solidaire d'un levier de commande (57) que l'utilisateur peut positionner dans un des crans ou trous prévus sur le secteur (56), en vue de placer le dispositif de guidage (17) dans les différentes positions. La présence de plusieurs crans ou trous fait qu'en sus, le dispositif de déplacement (24) peut être maintenu, au moyen dudit dispositif de réglage (55), dans au moins une position intermédiaire comprise entre les première et deuxième positions. Il s'agit notamment des positions illustrées par les figures 3 à 5. Dans l'exemple de réalisation de la figure 7, le levier de commande (57) est relié à la barrette (21) du dispositif de guidage (17) au moyen d'un levier de renvoi qui transforme un pivotement du levier de commande (57) en un déplacement des premier et deuxième axes (45 et 47) au sein de leurs premier et deuxième chemins de guidage (44 et 46) respectifs. A une commande directe telle que celle qui vient d'être décrite peut se substituer une commande distante. Celle-ci comporte par exemple un vérin, notamment hydraulique, électrique ou pneumatique, articulé entre le bras (23) et le dispositif de déplacement (24) ou le dispositif de guidage (17). Ce vérin peut être actionné depuis une centrale de commande placée à demeure sur la machine, par exemple sur une partie du bâti (1), ou déportée dans la cabine du tracteur auquel la machine est attelée. Alternativement, la commande directe peut comporter un moteur, notamment hydraulique ou électrique. Par exemple, le stator d'un tel moteur est fixé sur le bras (23) tandis que son rotor est connecté à un axe d'articulation de l'une des bielles (36 et 40) à la structure (22). Une commande distante telle que celles citées à titre d'exemples, permet aisément de déplacer et maintenir le dispositif de déplacement (24) dans les première et deuxième positions ainsi que dans toute position intermédiaire. Bien entendu, d'autres formes de dispositif de réglage (55) à commande directe ou distante restent envisageables. La manière dont un tel dispositif (55) est relié à la structure (22) d'une part, et au dispositif de déplacement (24) ou au dispositif de guidage (17) d'autre part, est susceptible d'être adaptée en fonction par exemple de la façon dont les premier et deuxième moyens de liaison (25 et 26) sont configurés.

Il est bien évident que l'invention n'est pas limitée aux exemples de réalisation décrits et représentés sur les figures annexées. Des modifications restent possibles dans la limite des revendications.

## Revendications

1. Machine agricole pour la récolte de fourrage comportant un bâti (1) auquel est reliée une structure (22) située, au moins partiellement, au-dessus d'au moins un dispositif de ramassage (2) de végétaux au sol, lequel dispositif comportant des dents (8) avec des pointes de dents (9) décrivant une enveloppe courbe (10) lorsque les dents (8) sont animées, la machine comportant également au moins un dispositif de traitement (3) des végétaux ramassés situé à proximité du dispositif de ramassage (2), et un dispositif de guidage (17) des végétaux situé au moins partiellement au-dessus et à distance réduite du dispositif de ramassage (2), le dispositif de guidage (17) étant déplaçable par rapport au dispositif de ramassage (2) autour d'un centre instantané de rotation principal (27), au moyen d'un dispositif de déplacement (24) comportant un premier moyen de liaison (25) et un deuxième moyen de liaison (26) du dispositif de guidage (17) à la structure (22), le premier moyen de liaison (25) autorisant le dispositif de guidage (17) à pivoter autour d'un premier centre instantané de rotation (39), le deuxième moyen de liaison (26) autorisant le dispositif de guidage (17) à pivoter autour d'un deuxième centre instantané de rotation (43), le dispositif de déplacement (24) pouvant être placé dans au moins une première position et une deuxième position, le dispositif de guidage (17) comportant une partie frontale (48) ayant une extrémité frontale inférieure (49), une partie arrière (50) délimitée par une extrémité arrière (51), et une partie intermédiaire (52) reliant la partie frontale (48) à la partie arrière (50), **caractérisée en ce que** le premier moyen de liaison (25) et le deuxième moyen de liaison (26) sont géométriquement et/ou élastiquement configurés de sorte que dans la première position, l'extrémité frontale inférieure (49) soit fortement relevée au-dessus du sol et que la partie intermédiaire (52) soit rapprochée des pointes de dents (9) du dispositif de ramassage (2), et que dans la deuxième position, l'extrémité frontale inférieure (49) soit fortement rapprochée du sol et que la partie intermédiaire (52) et la partie arrière (50) soient éloignées des pointes de dents (9) du dispositif de ramassage (2).

2. Machine agricole selon la revendication 1, **caractérisée en ce que** dans la première position, l'extrémité arrière (51) du dispositif de guidage (17) est rapprochée des pointes de dents (9) du dispositif de ramassage (2).

3. Machine agricole selon la revendication 1 ou 2, **caractérisée en ce que** le centre instantané de rotation principal (27) est localisé au voisinage de l'extrémité arrière (51) du dispositif de guidage (17) dans la première position.

4. Machine agricole selon l'une quelconque des revendications 1 à 3, **caractérisée en ce que** le centre instantané de rotation principal (27) est localisé au voisinage de l'extrémité frontale inférieure (49) du dispositif de guidage (17) dans la deuxième position.

5. Machine agricole selon l'une quelconque des revendications 1 à 4, **caractérisée en ce que** lorsque le dispositif de déplacement (24) est déplacé entre la première position et la deuxième position, le centre instantané de rotation principal (27) se déplace le long d'une première portion de courbe (53) située à l'intérieur de l'enveloppe courbe (10) décrite par les pointes de dents (9).

6. Machine agricole selon l'une quelconque des revendications 1 à 5, **caractérisée en ce que** lorsque le dispositif de déplacement (24) est déplacé entre la première position et la deuxième position, le centre instantané de rotation principal (27) se déplace le long d'une deuxième portion de courbe (54) inclinée vers le sol dans une direction d'avancement (A) de la machine.

7. Machine agricole selon les revendications 5 et 6, **caractérisée en ce que** la première portion de courbe (53) et la deuxième portion de courbe (54) sont au moins partiellement confondues.

8. Machine agricole selon l'une quelconque des revendications 5 à 7, **caractérisée en ce que** lorsque le centre instantané de rotation principal (27) se déplace le long de la première portion de courbe (53), la partie intermédiaire (52) du dispositif de guidage (17) est sensiblement tangente à l'enveloppe courbe (10) décrite par les pointes de dents (9).

9. Machine agricole selon la revendication 1, **caractérisée en ce que** dans la première position, la partie arrière (50) du dispositif de guidage (17) s'étend sensiblement parallèlement à une enveloppe supérieure (16) du dispositif de traitement (3).

10. Machine agricole selon l'une quelconque des revendications 1 à 9, **caractérisée en ce que** le dispositif de traitement (3) comporte un convoyeur à bande (14) ou à rouleaux qui déplace les végétaux transversalement au dispositif de ramassage (2).

11. Machine agricole selon la revendication 9 ou 10, **caractérisée en ce que** dans la deuxième position, la partie arrière (50) du dispositif de guidage (17) forme avec une (1') enveloppe supérieure (16) du dispositif de traitement (3) un angle (α) compris entre 10° et 45°.

12. Machine agricole selon l'une quelconque des revendications 1 à 11, **caractérisée en ce que** le dispositif de ramassage (2) comporte une surface de guidage (4) courbée, fixe ou animée, qui entoure un rotor (5) animé autour d'un axe de rotation (6), que les dents (8) du dispositif de ramassage (2) émergent au moins partiellement de la surface de guidage (4), et que la surface de guidage (4) comporte une extrémité haute (11) et une extrémité basse (12) situées sensiblement à l'aplomb de l'axe de rotation (6) du rotor (5).

13. Machine agricole selon la revendication 12, **caractérisée en ce que** dans la première position, l'extrémité frontale inférieure (49) du dispositif de guidage (17) se situe entre un premier plan (P1) horizontal passant par l'axe de rotation (6) du rotor (5) et un deuxième plan (P2) horizontal passant par l'extrémité haute (11) de la surface de guidage (4).

14. Machine agricole selon la revendication 12 ou 13, **caractérisée en ce que** dans la deuxième position, l'extrémité frontale inférieure (49) du dispositif de guidage (17) se situe entre un (le) premier plan (P1) horizontal passant par l'axe de rotation (6) du rotor (5) et un troisième plan (P3) horizontal passant par l'extrémité basse (12) de la surface de guidage (4).

15. Machine agricole selon l'une quelconque des revendications 12 à 14, **caractérisée en ce que** dans la deuxième position, la partie intermédiaire (52) du dispositif de guidage (17) est éloignée des pointes de dents (9) d'environ deux fois une distance séparant les pointes de dents (9) de la surface de guidage (4).

16. Machine agricole selon l'une quelconque des revendications 12 à 15, **caractérisée en ce que** dans la première position, l'extrémité arrière (51) du dispositif de guidage (17) est située, relativement à une (la) direction d'avancement (A), en arrière de l'extrémité haute (11) de la surface de guidage (4).

17. Machine agricole selon l'une quelconque des revendications 12 à 16, **caractérisée en ce que** dans la deuxième position, l'extrémité arrière (51) du dispositif de guidage (17) est située, relativement à une(la) direction d'avancement (A), en avant de l'extrémité haute (11) de la surface de guidage (4).

18. Machine agricole selon l'une quelconque des revendications 1 à 17, **caractérisée en ce que** la partie frontale (48) du dispositif de guidage (17) présente une forme bombée en direction du sol et est placée à l'avant du dispositif de ramassage (2) de sorte que la partie frontale (48) passe au-dessus des végétaux au sol avant que ceux-ci ne soient ramassés par le dispositif de ramassage (2).

19. Machine agricole selon l'une quelconque des revendications 1 à 18, **caractérisée en ce que** le premier moyen de liaison (25) comporte une première bielle (36) reliée à la structure (22) par une première articulation (37) et au dispositif de guidage (17) par une deuxième articulation (38), et que le premier centre instantané de rotation (39) est constitué par un centre de la première articulation (37).

20. Machine agricole selon l'une quelconque des revendications 1 à 18, **caractérisée en ce que** le premier moyen de liaison(25) comporte un premier chemin de guidage (44) lié à la structure (22), à l'intérieur duquel un premier axe (45) lié au dispositif de guidage (17) peut se déplacer autour du premier centre instantané de rotation (39).

21. Machine agricole selon la revendication 19 ou 20, **caractérisée en ce que** le deuxième moyen de liaison (26) comporte une deuxième bielle (40) reliée à la structure (22) par une troisième articulation (41) et au dispositif de guidage (17) par une quatrième articulation (42), et que le deuxième centre instantané de rotation (43) est constitué par un centre de la troisième articulation (41).

22. Machine agricole selon la revendication 19 ou 20, **caractérisée en ce que** le deuxième moyen de liaison (26) comporte un deuxième chemin de guidage (46) lié à la structure (22), à l'intérieur duquel un deuxième axe (47) lié au dispositif de guidage (17) peut se déplacer autour du deuxième centre instantané de rotation (43).

23. Machine agricole selon l'une quelconque des revendications 1 à 22, **caractérisée en ce que** le dispositif de déplacement (24) peut être maintenu dans les première et deuxième positions au moyen d'un dispositif de réglage (55) à commande directe ou distante.

24. Machine agricole selon la revendication 23, **caractérisée en ce que** le dispositif de déplacement (24) peut également, au moyen du dispositif de réglage (55), être maintenu dans au moins une position intermédiaire comprise entre les première et deuxième positions.

25. Machine agricole selon l'une quelconque des revendications 1 à 24, **caractérisée en ce que** la structure (22) comporte au moins un bras (23) portant le dispositif de déplacement (24), lequel bras (23) est articulé par rapport au bâti (1) au moyen d'un axe (29) sensiblement horizontal autour duquel axe (29) le bras (23) peut pivoter vers le haut d'un certain angle.

26. Machine agricole selon la revendication 25, **caractérisée en ce que** le bras (23) s'étend par-dessus le dispositif de traitement (3).

## Patentansprüche

1. Landwirtschaftliche Maschine für die Futterernte mit einem Gestell (1), mit dem eine Struktur (22) verbunden ist, die wenigstens teilweise oberhalb von mindestens einer Einrichtung zum Sammeln (2) von Pflanzen vom Boden angeordnet ist, wobei die Einrichtung Zähne (8) mit Spitzen der Zähne (9) aufweist, die eine gekrümmte Einhüllende (10) beschreiben, wenn die Zähne (8) betätigt werden, wobei die Maschine auch wenigstens eine Einrichtung zum Behandeln (3) der gesammelten Pflanzen aufweist, die in der Nähe der Einrichtung zum Sammeln (2) angeordnet ist, und eine Einrichtung zum Führen (17) der Pflanzen, die wenigstens teilweise oberhalb und in einem reduzierten Abstand von der Einrichtung zum Sammeln (2) angeordnet ist, wobei die Einrichtung zum Führen (17) im Verhältnis zu der Einrichtung zum Sammeln (2) um ein momentanes Hauptrotationszentrum (27) verstellbar ist, mit Hilfe wenigstens einer Einrichtung zum Verstellen (24), welche ein erstes Verbindungsmittel (25) und ein zweites Verbindungsmittel (26) zum Verbinden der Einrichtung zum Führen (17) mit der Struktur (22) aufweist, wobei die ersten Verbindungsmittel (25) es der Einrichtung zum Führen (17) erlauben, um ein erstes momentanes Rotationszentrum (39) zu schwenken, wobei die zweiten Verbindungsmittel (26) es der Einrichtung zum Führen (17) erlauben, um ein zweites momentanes Rotationszentrum (43) zu schwenken, wobei die Einrichtung zum Verstellen (24) mindestens in einer ersten Position und einer zweiten Position angeordnet werden kann, wobei die Einrichtung zum Führen (17) einen vorderen Teil (48) mit einem unteren Vorderende (49), einen hinteren Teil (50), der von einem hinteren Ende (51) begrenzt wird, und einen Zwischenteil (52) aufweist, der den vorderen Teil (48) mit dem hinteren Teil (50) verbindet,
**dadurch gekennzeichnet,**
**dass** das erste Verbindungsmittel (25) und das zweite Verbindungsmittel (26) geometrisch und/oder elastisch dergestalt eingerichtet sind, dass in der ersten Position das untere Vorderende (49) deutlich oberhalb des Bodens angehoben wird und dass der mittlere Teil (52) an die Spitzen der Zähne (9) der Einrichtung zum Sammeln (2) angenähert wird, und
**dass** in der zweiten Position das untere Vorderende (49) deutlich an den Boden angenähert wird und dass der mittlere Teil (52) und der hintere Teil (50) von den Spitzen der Zähne (9) der Einrichtung zum Sammeln (2) entfernt werden.

2. Landwirtschaftliche Maschine nach Anspruch 1,
**dadurch gekennzeichnet,**
**dass** in der ersten Position das hintere Ende (51) der Einrichtung zum Führen (17) an die Spitzen der Zähne (9) der Einrichtung zum Sammeln (2) angenähert wird.

3. Landwirtschaftliche Maschine nach Anspruch 1 oder 2,
**dadurch gekennzeichnet,**
**dass** das momentane Hauptrotationszentrum (27) benachbart zu dem hinteren Ende (51) der Einrichtung zum Führen (17) in der ersten Position lokalisiert ist.

4. Landwirtschaftliche Maschine nach einem der Ansprüche 1 bis 3,
**dadurch gekennzeichnet,**
**dass** das momentane Hauptrotationszentrum (27) benachbart zu dem unteren Vorderende (49) der Einrichtung zum Führen (17) in der zweiten Position lokalisiert ist.

5. Landwirtschaftliche Maschine nach einem der Ansprüche 1 bis 4,
**dadurch gekennzeichnet,**
**dass**, wenn die Einrichtung zum Verstellen (24) zwischen der ersten Position und der zweiten Position verstellt wird, sich das momentane Hauptrotationszentrum (27) entlang einer ersten Teilkurve (53) verstellt, die sich im Inneren der durch die Spitzen der Zähne (9) beschriebenen gekrümmten Einhüllenden (10) befindet.

6. Landwirtschaftliche Maschine nach einem der Ansprüche 1 bis 5,
**dadurch gekennzeichnet,**
**dass**, wenn die Einrichtung zum Verstellen (24) zwischen der ersten Position und der zweiten Position verstellt wird, sich das momentane Hauptrotationszentrum (27) entlang einer zweiten Teilkurve (54) verstellt, die gegen den Boden in Richtung einer Vorwärtsbewegung (A) der Maschine geneigt ist.

7. Landwirtschaftliche Maschine nach den Ansprüchen 5 und 6,
**dadurch gekennzeichnet,**
**dass** die erste Teilkurve (53) und die zweite Teilkurve (54) wenigstens teilweise zusammenfallen.

8. Landwirtschaftliche Maschine nach einem der einem der Ansprüche 5 bis 7,
**dadurch gekennzeichnet,**
**dass**, wenn das momentane Hauptrotationszentrum (27) sich entlang der ersten Teilkurve (53) verstellt, der Zwischenteil (52) der Vorrichtung zum Führen (17) im Wesentlichen tangential an der gekrümmten Einhüllenden (10) liegt, die durch die Spitzen der Zähne (9) beschrieben wird.

9. Landwirtschaftliche Maschine nach Anspruch 1,
**dadurch gekennzeichnet,**
**dass** in der ersten Position der hintere Teil (50) der Einrichtung zum Führen (17) sich im Wesentlichen parallel zu einer oberen Einhüllenden (16) der Einrichtung zum Behandeln (3) erstreckt.

10. Landwirtschaftliche Maschine nach einem der Ansprüche 1 bis 9,
**dadurch gekennzeichnet,**
**dass** die Einrichtung zum Behandeln (3) einen Bandförderer (14) oder einen Förderer mit Rollen aufweist, welcher die Pflanzen quer zur Einrichtung zum Sammeln (2) befördert.

11. Landwirtschaftliche Maschine nach Anspruch 9 oder 10,
**dadurch gekennzeichnet,**
**dass** in der zweiten Position der hintere Teil (50) der Einrichtung zum Führen (17) mit einer (oder der) oberen Einhüllenden (16) der Einrichtung zum Behandeln (3) einen Winkel (α) zwischen 10 und 45° bildet.

12. Landwirtschaftliche Maschine nach einem der Ansprüche 1 bis 11,
**dadurch gekennzeichnet,**
**dass** die Einrichtung zum Sammeln (2) eine feststehende oder bewegte gekrümmte Führungsfläche (4) aufweist, die einen um eine Rotationsachse (6) bewegten Rotor (5) umgibt,
**dass** die Zähne (8) der Einrichtung zum Sammeln (2) wenigstens teilweise aus der Führungsfläche (4) herauskommen und
**dass** die Führungsfläche (4) ein oberes Ende (11) und ein unteres Ende (12) aufweist, die im Wesentlichen senkrecht zur Rotationsachse (6) des Rotors (5) angeordnet sind.

13. Landwirtschaftliche Maschine nach Anspruch 12,
**dadurch gekennzeichnet,**
**dass** in der ersten Position das untere Vorderende (49) der Einrichtung zum Führen (17) sich zwischen einer ersten horizontalen Ebene (P1), die sich durch die Rotationsachse (6) des Rotors (5) erstreckt, und einer zweiten horizontalen Ebene (P2) befindet, die durch das obere Ende (11) der Führungsfläche (4) hindurchgeht.

14. Landwirtschaftliche Maschine nach Anspruch 12 oder 13,
**dadurch gekennzeichnet,**
**dass** in der zweiten Position das untere Vorderende (49) der Einrichtung zum Führen (17) sich zwischen einer (der) ersten horizontalen Ebene (P1), die sich durch die Rotationsachse (6) des Rotors (5) erstreckt, und einer dritten horizontalen Ebene (P3) befindet, die durch das untere Ende (12) der Führungsfläche (4) hindurchgeht.

15. Landwirtschaftliche Maschine nach einem der Ansprüche 12 bis 14,
**dadurch gekennzeichnet,**
**dass** in der zweiten Position der Zwischenteil (52) der Einrichtung zum Führen (17) von den Spitzen der Zähne (9) ungefähr um das Zweifache des Abstands, der die Spitzen der Zähne (9) von der Führungsfläche (4) trennt, beabstandet ist.

16. Landwirtschaftliche Maschine nach einem der Ansprüche 12 bis 15,
**dadurch gekennzeichnet,**
**dass** in der ersten Position das hintere Ende (51) der Einrichtung zum Führen (17) bezüglich einer (der) Richtung einer Vorwärtsbewegung (A) hinter dem oberen Ende (11) der Führungsfläche (4) angeordnet ist.

17. Landwirtschaftliche Maschine nach einem der Ansprüche 12 bis 16,
**dadurch gekennzeichnet,**
**dass** in der zweiten Position das hintere Ende (51) der Einrichtung zum Führen (17) bezüglich einer (der) Richtung einer Vorwärtsbewegung (A) vor dem oberen Ende (11) der Führungsfläche (4) angeordnet ist.

18. Landwirtschaftliche Maschine nach einem der Ansprüche 1 bis 17,
**dadurch gekennzeichnet,**
**dass** der vordere Teil (48) der Einrichtung zum Führen (17) eine in Richtung des Bodens ausgebauchte Form aufweist und vor der Einrichtung zum Sammeln (2) dergestalt angebracht ist, dass der vordere Teil (48) sich oberhalb der Pflanzen auf dem Boden hinwegbewegt, bevor diese von der Einrichtung zum Sammeln (2) gesammelt werden.

19. Landwirtschaftliche Maschine nach einem der Ansprüche 1 bis 18,
**dadurch gekennzeichnet,**
**dass** das erste Verbindungsmittel (25) eine Antriebsstange (36) aufweist, die mit der Struktur (22) durch ein erstes Gelenk (37) und mit der Einrichtung zum Führen (17) durch ein zweites Gelenk (38) verbunden ist, und
**dass** das erste momentane Rotationszentrum (39) durch einen Mittelpunkt des ersten Gelenks (37) gebildet ist.

20. Landwirtschaftliche Maschine nach einem der Ansprüche 1 bis 18,
**dadurch gekennzeichnet,**
**dass** die ersten Verbindungsmittel (25) einen an die Struktur (22) gebundenen Führungsweg (44) aufweisen, in dessen Innerem eine erste Achse (45), die an die Einrichtung zum Führen (17) gebunden ist, sich um das erste momentane Rotationszentrum (39) herum verstellen kann.

21. Landwirtschaftliche Maschine nach Anspruch 19 oder 20,
**dadurch gekennzeichnet,**
**dass** die zweiten Verbindungsmittel (26) eine zweite Antriebsstange (40) aufweisen, die mit der Struktur (22) durch ein drittes Gelenk (41) und mit der Einrichtung zum Führen (17) durch ein viertes Gelenk (42) verbunden ist, und dass das zweite momentane Rotationszentrum (43) durch einen Mittelpunkt des dritten Gelenks (41) gebildet ist.

22. Landwirtschaftliche Maschine nach Anspruch 19 oder 20,
**dadurch gekennzeichnet,**
**dass** die zweiten Verbindungsmittel (26) einen zweiten, an die Struktur (22) gebundenen Führungsweg (46) aufweisen, in dessen Innerem eine zweite Achse (47), die an die Einrichtung zum Führen (17) gebunden ist, sich um das zweite momentane Rotationszentrum (43) herum verstellen kann.

23. Landwirtschaftliche Maschine nach einem der Ansprüche 1 bis 22,
**dadurch gekennzeichnet,**
**dass** die Einrichtung zum Verstellen (24) in der ersten und zweiten Position gehalten werden kann mit Hilfe einer Einrichtung zum Regeln (55) zur direkten Bedienung oder Fernbedienung.

24. Landwirtschaftliche Maschine nach Anspruch 23,
**dadurch gekennzeichnet,**
**dass** die Einrichtung zum Verstellen (24) auch mit Hilfe der Einrichtung zum Regeln (55) in wenigstens einer Zwischenposition zwischen der ersten und zweiten Position gehalten werden kann.

25. Landwirtschaftliche Maschine nach einem der Ansprüche 1 bis 24,
**dadurch gekennzeichnet,**
**dass** die Struktur (22) wenigstens einen Arm (23) aufweist, der die Einrichtung zum Verstellen (24) trägt, wobei der Arm (23) an dem Gestell (1) mit Hilfe einer im Wesentlichen horizontalen Achse (29) angelenkt ist, wobei der Arm (23) um die Achse (29) herum nach oben um einen bestimmten Winkel schwenken kann.

26. Landwirtschaftliche Maschine nach Anspruch 25,
**dadurch gekennzeichnet,**
**dass** sich der Arm (23) oberhalb der Einrichtung zum Behandeln (3) erstreckt.

## Claims

1. Agricultural machine for the harvesting of fodder comprising a frame (1) to which is connected a structure (22) situated, at least partially, above at least one pick-up device (2) for picking up plants lying on the ground, the pick-up device comprising teeth (8) with teeth points (9) describing a curve envelope (10) when the teeth (8) are driven, the machine also comprising at least one processing device (3) for processing the picked up plants which is situated close to the pick-up device (2), and a guiding device (17) for guiding the plants which is situated at least partially above and at a small distance from the pick-up device (2), the guiding device (17) being displaceable with respect to the pick-up device (2) about a main instantaneous rotation center (27), by means of a displacement device (24) comprising a first connecting means (25) and a second connecting means (26) of the guiding device (17) to the structure (22), the first connecting means (25) enabling the guiding device (17) to pivot about a first instantaneous rotation center (39), the second connecting means (26) enabling the guiding device (17) to pivot about a second instantaneous rotation center (43), the displacement device (24) being able to be placed in at least a first position and a second position, the guiding device (17) comprising a front part (48) having a lower front end (49), a rear part (50) delimited by a rear end (51), and an intermediate part (52) connecting the front part (48) to the rear part (50), ***characterized in that*** the first connecting means (25) and the second connecting means (26) are geometrically and/or elastically configured such that in the first position, the lower front end (49) is raised greatly above the ground and the intermediate part (52) is brought close to the teeth points (9) of the pick-up device (2), and that in the second position the lower front end (49) is brought greatly close to the ground and that the intermediate part (52) and the rear part (50) are distanced from the teeth points (9) of the pick-up device (2).

2. Agricultural machine according to Claim 1, ***characterized in that*** in the first position, the rear end (51) of the guiding device (17) is brought close to the teeth points (9) of the pick-up device (2).

3. Agricultural machine according to Claim 1 or 2, ***characterized in that*** the main instantaneous rotation center (27) is located in the vicinity of the rear end (51) of the guiding device (17) in the first position.

4. Agricultural machine according to any one of Claims 1 to 3, ***characterized in that*** the main instantaneous rotation center (27) is located in the vicinity of the lower front end (49) of the guiding device (17) in the second position.

5. Agricultural machine according to any one of Claims 1 to 4, ***characterized in that*** when the displacement device (24) is moved between the first position and the second position, the main instantaneous rotation center (27) moves along a first curve portion (53) situated inside of the curve envelope (10) described by the teeth points (9).

6. Agricultural machine according to any one of Claims 1 to 5, ***characterized in that*** when the displacement device (24) is moved between the first position and the second position, the main instantaneous rotation center (27) moves along a second curve portion (54) inclined towards the ground following a direction of advance (A) of the machine.

7. Agricultural machine according to Claims 5 and 6, ***characterized in that*** the first curve portion (53) and the second curve portion (54) are at least partially coincident.

8. Agricultural machine according to any one of Claims 5 to 7, ***characterized in that*** when the main instantaneous rotation center (27) moves along the first curve portion (53), the intermediate part (52) of the guiding device (17) is substantially tangent to the curve envelope (10) described by the teeth points (9).

9. Agricultural machine according to Claim 1, ***characterized in that*** in the first position, the rear part (50) of the guiding device (17) extends substantially parallel to an upper envelope (16) of the processing device (3).

10. Agricultural machine according to any one of Claims 1 to 9, ***characterized in that*** the processing device (3) comprises a conveyor having a belt (14) or a conveyor with rollers which moves the plants transversely to the pick-up device (2).

11. Agricultural machine according to Claim 9 or 10, ***characterized in that*** in the second position, the rear part (50) of the guiding device (17) forms with an (the) upper envelope (16) of the processing device (3) an angle (α) comprised between 10° and 45°.

12. Agricultural machine according to any one of Claims 1 to 11, ***characterized in that*** the pick-up device (2) comprises a curved guiding surface (4), fixed or driven, which surrounds a rotor (5) driven about a rotation axis (6), that the teeth (8) of the pick-up device (2) emerge at least partially from the guiding surface, and that the guiding surface (4) comprises an upper end (11) and a lower end (12) situated substantially plumb with the rotation axis (6) of the rotor (5).

13. Agricultural machine according to Claim 12, ***characterized in that*** in the first position, the lower front end (49) of the guiding device (17) is situated between a first horizontal plane (P1) passing through the rotation axis (6) of the rotor (5) and a second horizontal plane (P2) passing through the upper end (11) of the guiding surface (4).

14. Agricultural machine according to Claim 12 or 13, ***characterized in that*** in the second position, the lower front end (49) of the guiding device (17) is situated between a (the) first horizontal plane (P1) passing through the rotation axis (6) of the rotor (5) and a third horizontal plane (P3) passing through the lower end (12) of the guiding surface (4).

15. Agricultural machine according to any one of Claims 12 to 14, ***characterized in that*** in the second position, the intermediate part (52) of the guiding device (17) is distanced from the teeth points (9) by approximately twice a distance separating the teeth points (9) from the guiding surface (4).

16. Agricultural machine according to any one of Claims 12 to 15, ***characterized in that*** in the first position, the rear end (51) of the guiding device (17) is situated, relative to a (the) direction of advance (A), backwards of the upper end (11) of the guiding surface (4).

17. Agricultural machine according to any one of Claims 12 to 16, ***characterized in that*** in the second position, the rear end (51) of the guiding device (17) is situated, relative to a (the) direction of advance (A), forwards of the upper end (11) of the guiding surface (4).

18. Agricultural machine according to any one of Claims 1 to 17, ***characterized in that*** the front part (48) of the guiding device (17) has a shape curved in the direction of the ground and is placed at the front of the pick-up device (2) such that the front part (48) passes above the plants lying on the ground before the latter are picked up by the pick-up device (2).

19. Agricultural machine according to any one of Claims 1 to 18, ***characterized in that*** the first connecting means (25) comprises a first connecting rod (36) connected to the structure (22) by a first articulation (37) and to the guiding device (17) by a second articulation (38), and that the first instantaneous rotation center (39) is constituted by a center of the first articulation (37).

20. Agricultural machine according to any one of Claims 1 to 18, ***characterized in that*** the first connecting means (25) comprises a first guide track (44) connected to the structure (22), inside of which guide track a first axis (45) connected to the guiding device (17) can move about the first instantaneous rotation center (39).

21. Agricultural machine according to Claim 19 or 20, ***characterized in that*** the second connecting means (26) comprises a second connecting rod (40) connected to the structure (22) by a third articulation (41) and to the guiding device (17) by a fourth articulation (42), and that the second instantaneous rotation center (43) is constituted by a center of the third articulation (41).

22. Agricultural machine according to Claim 19 or 20, ***characterized in that*** the second connecting means (26) comprises a second guide track (46) connected to the structure (22), inside of which second guide track a second axis (47) connected to the guiding device (17) can move about the second instantaneous rotation center (43).

23. Agricultural machine according to any one of Claims 1 to 22, ***characterized in that*** the displacement device (24) can be kept in the first and second positions by means of an adjustment device (55) with direct or remote control.

24. Agricultural machine according to Claim 23, ***characterized in that*** the displacement device (24) can also be kept, by means of the adjustment device (55), in at least one intermediate position comprised between the first and second positions.

25. Agricultural machine according to any one of Claims 1 to 24, ***characterized in that*** the structure (22) comprises at least one arm (23) carrying the displacement device (24), which arm (23) is articulated with respect to the frame (1) by means of a substantially horizontal axis (29), about which axis (29) the arm (23) can pivot upwards by a certain angle.

26. Agricultural machine according to Claim 25, ***characterized in that*** the arm (23) extends over the processing device (3).
